# EUROPÄISCHE PATENTANMELDUNG

(11) **EP 3 184 359 A1**
(43) Veröffentlichungstag der Anmeldung: **28.06.2017**
(21) Anmeldenummer: 16205442.3
(22) Anmeldetag: 20.12.2016
(51) Int. Cl.: B60N 3/10, B60R 11/00

(54) **HALTERUNG FÜR GEBINDE**

(30) Priorität: 22.12.2015 AT 8142015
(71) Anmelder: "Fredl's Glaserei" Amir Avdic e.U., 9871 Seeboden (AT)
(72) Erfinder: AVDIC, Amir, 9871 Seeboden (AT)
(74) Vertreter: Beer & Partner Patentanwälte KG

(57) **Zusammenfassung**

Eine Halterung (1) für ein Gebinde (4), in dem ein Nahrungsmittel enthalten ist, umfasst einen Aufnahmebehälter (2) für Gebinde (4), der über ein Kugelgelenk (6) und eine Einrichtung (7) an Leisten (10) des Gitters einer Luftauslassdüse (9) in einem Fahrzeug festlegbar ist. Rings um die Einrichtung (7) ist eine Manschette (14) vorgesehen, sodass Luft aus der Luftauslassdüse (9) in den Innenraum (3) des Aufnahmebehälters (2) strömt. Durch Einstellen der Temperatur der Luft, die aus der Luftauslassdüse (9) austritt, kann das in dem Gebinde (4) das in dem Aufnahmeraum (3) des Aufnahmebehälters (2) aufgenommen ist, enthaltene Nahrungsmittel erwärmt oder gekühlt werden.

## Beschreibung

Die Erfindung betrifft eine Halterung für Gebinde, die insbesondere für die Verwendung in einem Fahrzeug, wie einem PKW, LKW oder einem Bus bestimmt ist und welche die Merkmale von Patentanspruch 1 aufweist.

Die US 6,533,232 B1 zeigt eine gattungsgemäße Halterung für Gebinde (Sodawasser-Dosen), die an einem Lüftungsauslass befestigt werden kann. Die aus dem Lüftungsauslass austretende erwärmte/gekühlte Luft streicht an dem Gebinde in der Halterung entlang und erwärmt/kühlt den Inhalt des Gebindes. Das Befestigen der Halterung der US 6,533,232 B1 erfolgt mit Hilfe von Haken, die mittels Schrauben betätigt werden. Zum Ausrichten der bekannten Halterung sind keilförmige Zwischenstücke vorgesehen.

Die DE 20 2011 051 891 U1 betrifft eine Halterung für Mobiltelefone, die ein Kugelgelenk umfasst, mit dem die Ausrichtung des Halters für das Mobiltelefon justiert werden kann.

Die US 2014/034697 A1 zeigt und beschreibt eine Halterung für Nahrungsmittelbehälter, die in einem Fahrzeug montiert werden kann. Zum Befestigen der Halterung an Rippen eines Lüftungsauslasses sind "Clips" vorgesehen. Bei dieser Halterung ist nicht vorgesehen, zum Temperieren des Inhaltes des Gebindes Luft aus einem Lüftungsauslass in die Halterung zu leiten.

In Gebinden enthaltene Nahrungsmittel (fest oder flüssig) sind häufig zu kühlen oder zu erwärmen, damit sie eine für den Verzehr geeignete Temperatur aufweisen.

Dies ist insbesondere in Fahrzeugen problematisch.

Der Erfindung liegt die Aufgabe zugrunde, eine Halterung der eingangs genannten Gattung anzugeben, die das Erwärmen oder Kühlen von in Gebinden enthaltenen Nahrungsmitteln (feste Nahrungsmittel oder flüssige Nahrungsmittel) erlaubt.

Gelöst wird diese Aufgabe erfindungsgemäß mit einer Halterung, welche die Merkmale von Anspruch 1 aufweist.

Bevorzugte und vorteilhafte Ausgestaltungen der Erfindung sind Gegenstand der Unteransprüche.

Da die erfindungsgemäße Halterung eine in dem Innenraum ihres Aufnahmebehälters mündende Leitung zum Zuführen von erwärmter oder gekühlter Luft und eine Einrichtung zum Festlegen der Halterung an einer Luftauslassdüse in einem Fahrzeug aufweist, kann die Halterung problemlos an der Luftauslassdüse des Fahrzeuges angebracht werden. Je nach der Temperatur der Luft, die durch die Luftauslassdüse austritt (gekühlt oder erwärmt), wird der Inhalt des Gebindes erwärmt oder gekühlt.

Der Leitung zum Zuführen von Luft zu dem Aufnahmebehälter der Halterung ist eine Manschette zugeordnet, die dichtend rings um die Luftauslassdüse anliegt.

Die Einrichtung zum Befestigen der Halterung an einer Luftauslassdüse weist Spreizhebel auf, die mit reibungserhöhenden Auflagen versehen sein können. Über diese Spreizhebel - beispielsweise sind zwei Spreizhebel vorgesehen - kann die Halterung an Leisten von Gittern von Luftauslassdüsen festgelegt werden.

Für das Auseinanderspreizen der Spreizhebel kann eine Spreizschraube oder Ähnliches vorgesehen sein.

Die erfindungsgemäße Halterung weist einen topfförmigen Aufnahmebehälter auf, der bevorzugt wärmeisolierend ausgebildet ist.

Insbesondere, wenn die erfindungsgemäße Vorrichtung zum Kühlen von Inhalten von Medien bestimmt ist, kann der Aufnahmebehälter für das Gebinde eine hohle Wand aufweisen, die mit einem durch Phasenumwandlung kühlenden Medium gefüllt ist.

Um die Ausrichtung des Aufnahmebehälters für das Gebinde der erfindungsgemäßen Halterung in eine jeweils günstige Stellung bewegen zu können, kann dieser mit dem an der Luftauslassdüse festzulegenden Teil über ein Kugelgelenk verbunden sein.

Weitere Einzelheiten und Merkmale der Erfindung ergeben sich aus der nachstehenden Beschreibung eines bevorzugten Ausführungsbeispiels anhand der teilweise schematischen Zeichnung.

Eine erfindungsgemäße Halterung 1 umfasst einen topförmigen Aufnahmebehälter 2 mit einem Aufnahmeraum 3, in dem ein Gebinde 4, im gezeigten Ausführungsbeispiel eine Getränkeflasche, eingesetzt werden kann. Die Wand 5 des Aufnahmebehälters 2 ist im gezeigten Ausführungsbeispiel wärmeisolierend ausgebildet und kann mit einem durch Phasenumwandlung kühlenden Medium gefüllt sein.

Der Aufnahmebehälter 2 für das Gebinde 4 ist über ein Kugelgelenk 6 mit einer Einrichtung 7 zum Festlegen der Halterung 1 an den Leisten 8 eines Gitters einer Luftauslassdüse 9, die am Armaturenbrett eines Kraftfahrzeuges vorgesehen ist, verbunden. Die Einrichtung 7 umfasst zwei in der Einrichtung 7 schwenkbar gelagerte Spreizhebel 11, die mit Hilfe einer Spreizeinrichtung 12, beispielsweise einer Spreizschraube, so verschwenkt werden können, dass sie an den Leisten 8 des Gitters der Luftauslassdüse 9 anlegbar sind. Vorteilhaft ist es, wenn die Spreizhebel 11 mit reibungserhöhenden Auflagen 13 versehen sind, um das Herausrutschen der Einrichtung 7 zum Festlegen der Haltung 1 an der Luftauslassdüse 9 zu verhindern.

Rings um die Einrichtung 7 zum Befestigen der Halterung 1 an einer Luftauslassdüse 9 ist eine kegelstumpfförmige Manschette 14 aus elastischem Werkstoff vorgesehen, die dichtend rings um die Luftauslassdüse 9 am Armaturenbrett anliegt. Gleichzeitig dient die Manschette 14 dazu, aus der Luftauslassdüse 9 ausströmende Luft (Pfeile 15) in den Aufnahmeraum 3 des Aufnahmebehälters 2 für das Gebinde der erfindungsgemäßen Halterung 1 zu leiten.

Je nachdem, wie die Lüftung des Fahrzeuges eingestellt ist (Heizen oder Kühlen), wird der Inhalt des Gebindes 4, das in dem Aufnahmeraum 3 des Aufnahmebehälters 2 der erfindungsgemäßen Halterung 1 eingesetzt ist, erwärmt oder gekühlt.

Zum raschen Abkühlen des Inhaltes des Gebindes 4 kann die Klimaanlage des Fahrzeuges auf Umluft und so eingestellt werden, dass die gesamte gekühlte Luft ausschließlich aus der Luftauslassdüse 9 austritt, an der die erfindungsgemäße Halterung 1 befestigt ist. Sobald die gewünschte Temperatur erreicht ist, kann wieder auf normales Klimatisieren des Innenraumes des Fahrzeuges umgeschaltet werden.

Zusammenfassend kann ein Ausführungsbeispiel der Erfindung wie folgt beschrieben werden:
Eine Halterung 1 für ein Gebinde 4, in dem ein Nahrungsmittel enthalten ist, umfasst einen Aufnahmebehälter 2 für das Gebinde 4, der über ein Kugelgelenk 6 und eine Einrichtung 7 an Leisten 10 des Gitters einer Luftauslassdüse 9 in einem Fahrzeug festlegbar ist. Rings um die Einrichtung 7 ist eine Manschette 14 vorgesehen, sodass Luft aus der Luftauslassdüse 9 in den Innenraum 3 des Aufnahmebehälters 2 strömt. Durch Einstellen der Temperatur der Luft, die aus der Luftauslassdüse 9 austritt, kann das in dem Gebinde 4, das in dem Aufnahmeraum 3 des Aufnahmebehälters 2 aufgenommen ist, enthaltene Nahrungsmittel erwärmt oder gekühlt werden.

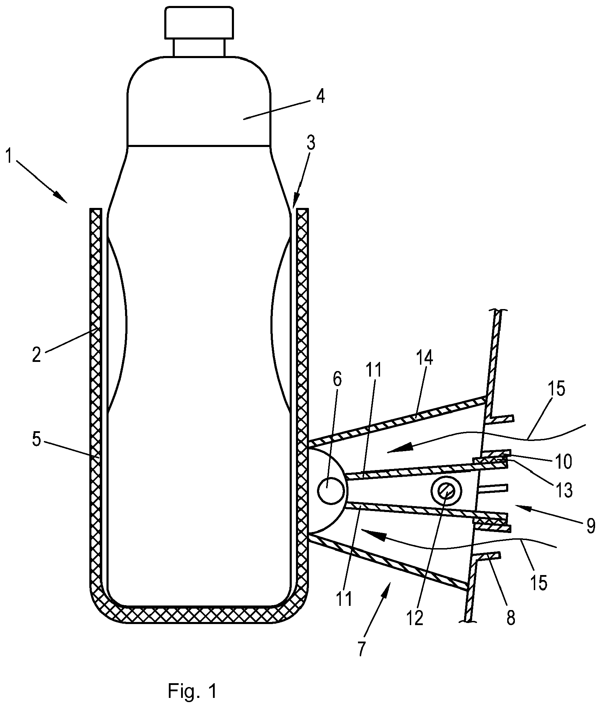

## Patentansprüche

1. Halterung (1) für Gebinde (4) mit einem Aufnahmebehälter (2) mit einem Aufnahmeraum (3) für das Gebinde (4), mit einer Einrichtung (7) zum Festlegen des Aufnahmebehälters (2) an einer Luftauslassdüse (9) in einem Fahrzeug, **dadurch gekennzeichnet, dass** eine Manschette (14) vorgesehen ist, durch die erwärmte oder gekühlte Luft aus der Luftauslassdüse (9) in den Aufnahmeraum (3) des Aufnahmebehälters (2) strömt, dass die Manschette (14) als elastische Manschette (14) ausgebildet ist, die dichtend um die Luftauslassdüse (9) herum anlegbar ist, dass die Einrichtung (7) zum Festlegen der Halterung (1) an dem Gitter einer Luftauslassdüse (9) im Inneren der Manschette (14) vorgesehen ist und dass die Einrichtung (7) zum Festlegen der Halterung (1) wenigstens zwei Spreizhebel (11) aufweist, denen eine Spreizeinrichtung (12) zugeordnet ist.

2. Halterung nach Anspruch 1, **dadurch gekennzeichnet, dass** die Spreizhebel (11) elastisch biegbar ausgebildet sind.

3. Halterung nach Anspruch 1, **dadurch gekennzeichnet, dass** die Spreizhebel (11) schwenkbar gelagert sind.

4. Halterung nach einem der Ansprüche 1 bis 3, **dadurch gekennzeichnet, dass** die der Luftauslassdüse (9) zugeordneten Enden der Spreizhebel (11) reibungserhöhend ausgebildet, insbesondere mit Gummiauflagen (13) versehen sind.

5. Halterung nach einem der Ansprüche 1 bis 4, **dadurch gekennzeichnet, dass** die Einrichtung (7) zum Festlegen der Halterung (1) an einer Luftauslassdüse (9) mit dem Aufnahmebehälter (2) über ein Kugelgelenk (6) verbunden ist.

6. Halterung nach einem der Ansprüche 1 bis 5, **dadurch gekennzeichnet, dass** der Aufnahmebehälter (2) eine wärmeisolierend ausgebildete Wand (5) aufweist.
